Europäisches Patentamt

European Patent Office

Office européen des brevets

(11) Publication number: **0 344 379**
**A2**

(12) **EUROPEAN PATENT APPLICATION**

(21) Application number: **88308853.6**

(22) Date of filing: **23.09.88**

(51) Int. Cl.⁴: **C09D 11/16 , B43K 8/00**

(30) Priority: **02.06.88 JP 136027/88**

(43) Date of publication of application:
**06.12.89 Bulletin 89/49**

(84) Designated Contracting States:
**DE FR GB IT**

(71) Applicant: **NIPPON KEIKO KAGAKU COMPANY, LIMITED**
**No. 3410, Yoshioka**
**Ayase-shi Kanagawa-ken(JP)**

(72) Inventor: **Goto, Tsuneaki**
**No. 2293-109, Hino-cho**
**Konan-ku Kanagawa-ken(JP)**
Inventor: **Komoto, Muneaki**
**39-10, 2-chome Kitazawa**
**Setagaya-ku Tokyo(JP)**
Inventor: **Ide, Hiromitsu**
**No. 629-2, Yoda**
**Fujisawa-shi Kanagawa-ken(JP)**

(74) Representative: **Wain, Christopher Paul et al**
**A.A. THORNTON & CO. Northumberland House 303-306 High Holborn**
**London WC1V 7LE(GB)**

(54) Water-colour fluorescent ink for writing instrument.

(57) A water-colour fluorescent ink for writing instruments comprises: 30 to 70% by weight of a dyed material obtained by providing a monomeric mixture consisting of 10 to 80%, preferably 30 to 55%, by weight of acrylonitrile, 0.5 to 20% by weight of (metha)acrylic acid, and the balance of styrene, emulsifying and polymerising the monomeric mixture to provide emulsified polymers of a particle diameter less than 0.5μm, and dyeing the emulsified polymers with a fluorescent dye; and 5 to 35% by weight of a hydrophilic organic solvent.

EP 0 344 379 A2

# WATER-COLOUR FLUORESCENT INK FOR WRITING INSTRUMENT

The present invention relates to a water-colour fluorescent ink for writing instruments which is particularly useful when used on heat-sensitive and pressure-sensitive recording papers, and also to a writing instrument using such water-colour fluorescent ink.

Throughout the present specification, the term "(metha)acrylic acid" means acrylic acid and/or methacrylic acid.

Generally, the essential properties of a fluorescent ink for so-called fluorescent pens are: to flow smoothly out of the tip; not to become dried in and on the tip; not to cause the tip to become choked; and not to become hardened by time in the pen. After writing, the desirable properties of such a fluorescent ink are: to produce a clear bright tone of colour; to be proof against water and light; not to be oversoaked into the writing paper or substrate and hence free from setting-off; and free from discolouring on the developed surface of a pressure-sensitive paper or a heat-sensitive paper, which papers are very popular recording papers nowadays.

In the conventional art, a fluorescent ink comprises, as principal components, a fluorescent dye, a mordant, an organic solvent, and water. Such conventional water-colour fluorescent ink can produce a clear colour tone with increased brightness of fluorescence, can flow smoothly out of the tip of a pen, and can be stored in good condition for a long time. However, this conventional ink may discolour on the developed surface of a pressure-sensitive paper or a heat-sensitive paper and has a low resistance to water and light.

To this end, the present applicants have proposed, in Japanese patent laid-open publications nos. 61-268775 and 62-148580, an improved fluorescent ink which is free from the disadvantages of the conventional ink. According to this prior art, vinyl monomers are emulsified and polymerised, and then the resulting polymers are dyed with a fluorescent dye. However, in these two Japanese publications there is no disclosure or suggestion regarding any preferable embodiment or example of water-colour fluorescent ink and a pen using such ink.

It is therefore an object of the present invention to provide a water-colour fluorescent ink which can produce a clear colour tone with increased brightness of fluorescence, can flow smoothly out of the tip of a pen, and can be stored in good condition for a long time.

Another object of the invention is to provide a water-colour fluorescent ink which does not discolour on the developed surface of a pressure-sensitive paper or a heat-sensitive paper and which has good resistance to water and light.

A further object of the invention is to provide a fluorescent pen which can be conveniently charged with the water-colour fluorescent ink described above and which can present a very smooth writing touch.

According to the present invention, a water-colour fluorescent ink for writing instruments comprises: 30 to 70% by weight of a dyed material obtained by providing a monomeric mixture consisting of 10 to 80% by weight of acrylonitrile, 0.5 to 20% by weight of (metha)acrylic acid, and the balance of styrene, emulsifying and polymerising the monomeric mixture to provide emulsified polymers of a particle diameter less than $0.5\mu$, and dyeing the emulsified polymers with a fluorescent dye; and 5 to 35% by weight of a hydrophilic organic solvent. Preferably, the monomeric mixture includes 30 to 55% by weight of acrylonitrile.

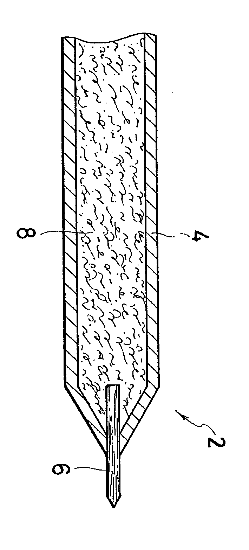

Embodiments of the invention will now be more particularly described by way of example and with reference to the accompanying drawings, in which:
The only Figure in the drawing is a fragmentary cross-sectional view of a pen using a water-colour fluorescent ink embodying the present invention.

The water-colour fluorescent ink comprises: 30 to 70% by weight of dyed material obtained by providing a monomeric mixture consisting of 10 to 80% by weight of acrylonitrile, 0.5 to 20% by weight of (metha)acrylic acid, and the balance of styrene, emulsifying and polymerizing the monomeric mixture to provide emulsified polymers of a particle diameter less than $0.5\mu$, and dyeing the emulsified polymers with a fluorescent dye; and 5 to 35% by weight of a hydrophilic organic solvent.

The particle diameter of the emulsified polymers to be used in the present invention is essentially less than $0.5\mu$ and preferably less than $0.3\mu$. If the particle diameter of the emulsified polymers exceeded $0.5\mu$, such emulsified polymers would settle in the water-colour fluorescent ink so that the resulting ink cannot be stored in good condition for a long time and cannot flow smoothly.

The emulsification and polymerisation of the monomeric mixture may be carried out by selection of a surface active agent depending on the purpose; and the temperature of polymerisation is preferably 50 to 90 ° C.

Preferably, the surface active agent may be an anionic surface active agent, such as alkylbenzenesulphonate, alkylphenolsulphonate, sulphonate with alkyldiphenyl ring, ketone of formalin-condensed alkylallyl-sulphonate of alkylallylsulphonic acid, sulphosuccinic acid ester salt, polyoxyethylenealkylsulphonate salt, polyoxyethylenealkylallylsulphonate salt, or it may be a nonionic surface active agent such as a condensation product of fatty acid with an ester such as glycerol, glycol, pentaerythritol, sorbitol or mannitol, or a condensation product of polyethyleneoxide with higher fatty acid, higher alcohol, high alkaliamine, or alkylphenolphosphoric acid. In the present invention, an anionic surface active agent may be used alone or in combination with a nonionic surface active agent, depending on the purpose.

Ammonium persulphate, potassium persulphate, or hydrogen peroxide, for example, may be used as an initiator. If necessary, a reducing agent may be used in combination with such initiator.

The fluorescent dye may be selected from the dye group including base dye (including carotene dye), disperse dye, oil dye, and fluorescent whitening dye. It is particularly useful when one or more kinds of daylight fluorescent dyes are used alone or in combination with ordinary dye (non-fluorescent dye) or pigment. However, the fluorescent dye is not limited to the disclosed examples.

Colouring by these dyes may be carried out either at the time of emulsification and polymerisation or after polymerisation, under the following conditions. The emulsion may be stirred, preferably for one to five hours at a temperature of 40 to 110°C at atmospheric pressure or under pressure; and the amount of dye is preferably 0.01 to 10 parts by weight, more preferably 0.1 to 5 parts by weight, compared with 100 parts by weight of the emulsified polymers (solid part).

Colouring by the dye is preferably done in the presence of a surface active agent. If the emulsified polymers are anionic or nonionic, the surface active agent should be preferably anionic or nonionic, irrespective of the kind of the dye. The polarities of the emulsified polymers, dye and surface active agent may be selected as desired to meet the purpose.

The hydrophilic organic solvent may include one or two selected from the group consisting of ethylene glycol, diethylene glycol, propylene glycol, dipropylene glycol, and glycerol. By mixing with such hydrophilic organic solvent at or after reaction, the fluorescent ink can flow smoothly out of the tip of a pen and can produce a clear colour tone. The hydrophilic organic solvent also serves to assist in adjusting the degree of dryness, namely, the degree of maintaining moisture, and the degree of viscosity at the tip of the pen, thus improving the writing characteristics. Particularly, ethylene glycol is useful for a pressure-sensitive paper, and glycerol is useful for a heat-sensitive paper. Diethylene glycol, propylene glycol and dipropylene glycol are useful to improve the clearness of colour tone. If the amount of the hydrophilic organic solvent mixed in the fluorescent ink is less than 5% by weight, the fluorescent ink would dry very quickly at the tip of a pen. If the amount of the hydrophilic organic solvent exceeds 35% by weight, the fluorescent ink would not dry so quickly, but would soak into the paper and hence would discolour on the developed surface of pressure-sensitive paper and heat-sensitive paper.

As shown in the drawings, a pen 2 embodying the present invention comprises an elongated tube 4, a pad 8 of polyester fibres within the tube and impregnated with the above-mentioned water-colour fluorescent ink, and a core member 6 in the form of a bundle of long polyester fibres. The core member 6 has its inner end touching the pad 8 and an outer end projecting from one end of the tube 4 to constitute a tip of the pen 2.

Given that the pad 8 and the core member 6 are made of polyester fibres, the water-colour fluorescent ink can flow with maximum smoothness, compared with the case in which natural fibres, wool/acryl blended fibres, polyacetal fibres, polypropylene fibres, vinyl fibres or urethane fibres are used.

The present water-colour fluorescent ink may comprise, in addition to the above-mentioned components, a surface active agent such as a nonionic surface active agent or an anionic surface active agent, levelling agent, preservative, gas-fading inhibitor, ion blocking agent, antioxidant, ultraviolet absorbent, defoaming agent, etc. By adding these components, it is possible not only to adjust the degree of viscosity and surface tension but also to improve heat-resistance and colour fastness to light, as a result of combined effect of physical and chemical actions between the components, thus improving the writing characteristics.

Example 1

A two-litre four-mouth flask to which a cooling pipe, a thermometer, a 500cc separating funnel (for introducing monomers), and a stirrer are connected, was placed in a hot-water bath, and 300g of water were introduced in the flask, and the temperature of the water in the flask was increased to 80°C. In the meantime, a monomeric mixture consisting of 140g of acrylonitrile, 228g of styrene, and 32g of methacrylic acid was mixed, stirred and dispersed in a mixed solution consisting of 218g of water and 80g of sodium polyoxyethylenealkylether sulphate, and additionally, two grams of ammonium persulphate were dissolved in the mixed solution. The resulting solution was added from the separating funnel into the flask for three hours under stirring. After five hours, polymerisation was terminated. To the resultant emulsified polymers, a composition consisting of 50g of sodium polyoxyethylene-alkylethersulphate, 20g of polyoxyethylenenonyl-phenolether, 70g of ethylene glycol, 10g of water and 10g of Maxilon-brilliantflavin 10GFF (trade name, of Ciba-Geigy AG) was added at room temperature under stirring, and mixed uniformly. This resulting product was gradually increased in temperature to 95°C and was dyed for two hours. As a result, a fluorescent ink base of a mean particle diameter of 0.12μ and a viscosity of 9.8 CPS (0.0098 Pa.s) (25°C) was obtained.

200g of ethylene glycol, 50g of diethylene glycol, 0.5g of polyoxyethylenenonylphenolether and 299.5g of refined water were added to 450g of fluorescent ink base and stirred to obtain a water-colour fluorescent ink.

This water-colour fluorescent ink was filled in an elongated tube in which a pad of polyester fibres and a core member in the form of a bundle of long polyester fibres are placed, thus providing a so-called fluorescent pen. This fluorescent pen presented good performance when used on a pressure-sensitive paper, and it had excellent proof against water and light. Also, the fluorescent ink flowed smoothly out of the tip of the pen without getting choked at the tip, thus making a bright yellow print in dispersed fine particles on paper.

## Example 2

To 840g of emulsified polymers obtained in the same manner as in Example 1, a composition consisting of 50g of polyoxyethylenealkylether sodium sulphate, 20g of polyoxyethylenenonylphenolether, 70g of ethylene glycol, 8g of water, 10g of Maxilonbrilliantflavin 10GFF (trade name, of Ciba-Geigy AG), and 2g of Eisencarotenepureblue 5GH (trade name of Hodogaya Chemical Co.) was added at room temperature under stirring, and mixed uniformly. This resulting product was gradually increased in temperature to 95°C and was dyed for two hours. As a result, a fluorescent ink base of a mean particle diameter of 0.12μ and a viscosity of 10.4 CPS (0.0104 Pa.s) (25°C) was obtained.

Using the thus produced water-colour fluorescent ink, a fluorescent pen was manufactured in the same manner as in Example 1.

This fluorescent pen presented good performance when used on pressure-sensitive paper, and had excellent proof against water and light. Also, the fluorescent ink flowed smoothly out of the tip of the pen without getting choked at the tip, thus making a bright green print in dispersed fine particles on paper.

## Example 3

Under the same conditions as in Example 1, a monomeric mixture consisting of 160g of acrylonitrile, 216g of styrene, 24g of methacrylic acid, 70g of sodium dodecylbenzenesulphonic acid, 10g of polyoxyethylenenonylphenolether, two grams of ammonium persulphate and 518g of water was emulsified and polymerised.

To 840g of the resultant emulsified polymers, a composition consisting of 50g of sodium dodecylbenzenesulphonic acid, 20g of polyoxyethylenenonylether, 70g of ethylene glycol, 5g of water, 13g of Sumikalonbrilliantflavin 10GL (trade name, of Sumitomo Chemical Industries, Co.) and 2g of Rohdamine 6GCP (trade name, of Sumitomo Chemical Industries, Co.) was added at room temperature under stirring, and mixed uniformly. This resulting product was gradually increased in temperature to 95°C and was dyed for two hours. As a result, a fluorescent ink base of a mean particle diameter of 0.14μ and a viscosity of 10.6 CPS (0.0106 Pa.s) (25°C) was obtained.

Using the thus obtained water-colour fluorescent ink, a fluorescent pen was manufactured in the same manner as in Example 1. This fluorescent pen presented good performance when used on pressure-sensitive paper and had excellent proof against water and light. Also, the fluorescent ink flowed smoothly out of the tip of the pen without getting choked at the tip, thus making a clear orange-colour print in dispersed fine particles on a paper.

## Example 4

To 840g of the emulsified polymers obtained in the same manner as in Example 3, a composition consisting of 50g of sodium dodecylbenzenesulphonic acid, 20g of polyoxyethylenenonylphenolether, 70g of ethylene glycol, 6g of water and 14g of Astrazonblue B (trade name, of Bayer AG) was added at room temperature under stirring, and mixed uniformly. This resultant product was gradually increased in temperature to 95°C and was dyed for two hours. As a result, a fluorescent ink base of a mean particle diameter of 0.14μ and a viscosity of 10.3 CPS (0.0103 Pa.s) (25°C) was obtained.

Using the thus obtained water-colour fluorescent ink, a fluorescent pen was manufactured in the same manner as in Example 1. This fluorescent pen presented good performance when used on pressure-sensitive paper and had excellent proof against water and light. Also, the fluorescent ink flowed smoothly out of the tip of the pen without getting choked at the tip, thus making a bright blue print in dispersed fine particles on a paper.

Example 5

Under the same conditions as in Example 1, a monomeric mixture consisting of 200g of acrylonitrile, 180g of styrene, 20g of acrylic acid, 70g of sodium polyoxyethylenealkylethersulphate, 10g of polyoxyethylenenonylphenolether, two grams of ammonium persulphate and 518g of water was emulsified and polymerised.

To 840g of the resultant emulsified polymers, a composition consisting of 50g of sodium polyoxyethylene alkylethersulphate, 20g of polyoxyethylenenonylphenolether, 70g of ethylene glycol, four grams of water and Astrazon 6B (trade name, of Bayer AG) was added at room temperature under stirring, and mixed uniformly. This resulting product was gradually increased in temperature to $95°C$ and was dyed for two hours. As a result, a fluorescent ink base of a mean particle diameter of $0.12\mu$ and a viscosity of 10.0 CPS (0.01 Pa.s) $(25°C)$ was obtained.

Using the thus obtained water-colour fluorescent ink, a fluorescent pen was manufactured in the same manner as in Example 1. This fluorescent pen presented good performance when used on pressure-sensitive paper, and it had excellent proof against water and light. Also, the fluorescent ink flowed smoothly out of the tip of the pen without getting choked at the tip, thus making a bright rose-colour print in dispersed fine particles on paper.

Example 6

To 840g of the emulsified polymers obtained in the same manner as in Example 5, a composition consisting of 50g of sodium polyoxyethylenealkylethersulphate, 20g of polyoxyethylenenonylphenolether, 70g of ethylene glycol, 14g of water, six grams of Rohdamine B (trade name, of Sumitomo Chemical Industries, Co.) was added at room temperature under stirring, and mixed uniformly. This resulting product was gradually increased in temperature to $95°C$ and was dyed for two hours. As a result, a fluorescent ink base of a mean particle diameter of $0.12\mu$ and a viscosity of 9.8 CPS (0.0098 Pa.s) $(25°C)$ was obtained.

Using the thus produced water-colour fluorescent ink, a fluorescent pen was manufactured in the same manner as in Example 1. This fluorescent pen presented good performance when used on pressure-sensitive paper, and it had excellent proof against water and light. Also, the fluorescent ink flowed smoothly out of the tip of the pen without getting choked at the tip, thus making a bright pink print in dispersed fine particles on a paper.

In each of the foregoing Examples, performance tests were conducted as follows:

Storage Life Test

The fluorescent pen was placed in a bath maintained at a temperature of $45°C$, and observation was made to find as to how many days it took to become unable to write. As a result, nothing wrong with the fluorescent pen was found in 180 days in each of Examples 1 to 6.

Dryness Test of Tip

The fluorescent pen with its cap off was placed for five hours in a bath maintained at a temperature of $20°C$ and a humidity of 45% to 55%, and thereafter a writing test was conducted on paper. As a result, the fluorescent pen was found still able to write.

Colour-tone Brightness Test

The brightness of colour tone of the written prints that were made on paper by the fluorescent pen was measured by a fluorescent spectrophotometer (light source: halogen lamp). The result were as follows (the larger the value, the brighter the colour tone):

Example 1: 157% (yellow),       Example 2: 142% (green),

Example 3: 156% (orange),        Example 4: 95% (blue)

. Example 5: 128% (rose),        Example 6: 154% (pink).

Lightproof Test

The fading of the written prints under irradiation of light for ten hours was measured by a fade-o-meter. The results of this measuring were found excellent.

## Waterproof Test

The paper on which the written prints were made by the fluorescent pen was soaked in water for an hour, observation with the naked eye was made to find how much the ink bled or came out in water. As a result, no bleeding was observed in each of Examples 1 to 6.

## Effect To Prints On Pressure-Sensitive Paper

Lines by the fluorescent pen were made directly on the prints on a commercially available pressure-sensitive paper, and after three minutes, observation with the naked eye was made to find any effect to the prints on the pressure-sensitive paper. As a result, no effect to the prints was observed in each of Examples 1 to 6.

## Claims

1. A water-colour fluorescent ink for writing instruments, characterised in that it comprises:

(a) 30 to 70% by weight of a dyed material obtained by providing a monomeric mixture consisting of 10 to 80% by weight of acrylonitrile, 0.5 to 20% by weight of (metha)acrylic acid, and the balance of styrene, emulsifying and polymerising said monomeric mixture to provide emulsified polymers of a particle diameter less than $0.5\mu$, and dyeing said emulsified polymers with a fluorescent dye; and

(b) 5 to 35% by weight of a hydrophilic organic solvent.

2. A water-colour fluorescent ink as claimed in claim 1, characterised in that said monomeric mixture includes 30 to 55% by weight of acrylonitrile.

3. A water-colour fluorescent ink as claimed in either claim 1 or claim 2, characterised in that said hydrophilic organic solvent comprises ethylene glycol, diethylene glycol, propylene glycol, dipropylene glycol, glycerol or a mixture of any two or more thereof.

4. A pen characterised in that it comprises:

(a) an elongated tube;

(b) a pad of polyester fibres placed within said tube and impregnated with a water-colour fluorescent ink;

(c) a core member in the form of a bundle of long polyester fibres, said core member having an inner end touching said pad and an outer end projecting from one end of said tube to constitute a tip of the pen; and

(d) said water-colour fluorescent ink comprising

(1) 30 to 70% by weight of a dyed material obtained by providing a monomeric mixture consisting of 10 to 80% by weight of acrylonitrile, 0.5 to 20% by weight of (metha)acrylic acid, and the balance of styrene, emulsifying and polymerising said monomeric mixture to provide emulsified polymers of a particle diameter less than $0.5\mu$, and dyeing said emulsified polymers with a fluorescent dye, and

(2) 5 to 35% by weight of a hydrophilic organic solvent.

5. A pen as claimed in claim 4, characterised in that said monomeric mixture includes 30 to 55% by weight of acrylonitrile.

6. A pen as claimed in either claim 4 or claim 5, characterised in that said hydrophilic organic solvent comprises ethylene glycol, diethylene glycol, propylene glycol, dipropylene glycol, glycerol or a mixture of two or more thereof.